# EUROPÄISCHE PATENTANMELDUNG

(11) **EP 0 970 788 A1**
(43) Veröffentlichungstag der Anmeldung: **12.01.2000**
(21) Anmeldenummer: 98112844.0
(22) Anmeldetag: 10.07.1998
(51) Int. Cl.: B27N 3/14

(54) **Vorrichtung zum Herstellen eines Vlieses aus einer faserförmigen Pressmasse**

(71) Anmelder: WERZALIT AG + CO., D-71720 Oberstenfeld (DE)
(72) Erfinder: Weinberg, Gerd, 71720 Oberstenfeld (DE); Schallenmüller, Karl-Heinz, 74360 Auenstein (DE)
(74) Vertreter: Bögl, Wolfgang, Dipl.-Ing.

(57) **Zusammenfassung**

Es ist eine Vorrichtung zur Herstellung eines Vlieses aus einer schlecht fließfähigen span- oder faserförmigen, mit einem Bindemittel versetzten Preßmasse beschrieben . Sie enthält eine Preßform (1) mit einem oberhalb des Füllraumes (4) auf die Preßform (1) aufsetzbaren , mit der Preßmasse füllbaren Behälter (2). Unterhalb des Bodens des Behälters (2) ist feststehend eine mit einem Schlitzmuster versehene Spanorientierungsmaske (3) angeordnet.

## Beschreibung

Die Erfindung betrifft eine Vorrichtung zum Herstellen eines Vlieses aus einer schüttfähigen, jedoch nur schlecht fließfähigen span- oder faserförmigen, mit einem Bindemittel versetzten Preßmasse in einer Preßform mit einem oberhalb des Füllraumes auf die Preßform aufsetzbaren, mit der Preßmasse füllbaren Behälter.

Eine solche Vorrichtung ist bekannt ( EP-A-0 084 074 ).Die bekannte Vorrichtung hat sich bei der Herstellung von gepreßten Profilkörpern bewährt. Ein Nachteil der bekannten Vorrichtung besteht jedoch darin , daß die span-oder faserförmige Preßmasse regellos in die Preßform eingefüllt wird. Die aus einem derart hergestellten Vlies gepreßten Profilkörper weisen in allen Richtungen eine im wesentlichen gleiche Biegefestigkeit und einen gleichmäßigen Elastizitätsmodul auf.

Es werden aber auch aus der span- oder faserförmigen Preßmasse gepreßte Profilkörper benötigt, welche in bestimmten Richtungen eine höhere Biegefestigkeit und einen höheren Elastizitätsmodul aufweisen als in anderen Richtungen.

Das der Erfindung zugrunde liegende technische Problem besteht darin, die bekannte Vorrichtung in der Weise zu verbessern, daß mit ihr ein Vlies der span- oder faserförmigen Preßmasse hergestellt werden kann, in dem zumindest ein Teil der Späne eine Richtungsorientierung erhält.

Dieses technische Problem ist erfindungsgemäß dadurch gelöst, daß unterhalb des Bodens des Behälters feststehend eine mit einem Schlitzmuster versehene Spanorientierungsmaske angeordnet ist.

Vorteilhafte Ausgestaltungen der Erfindung sind in den Ansprüchen 2 und 5 enthalten. Sie ist nachstehend anhand der in den Figuren 1 bis 9 gezeigten Ausführungsbeispiele näher erläutert. Es zeigen:
- Fig.1 und Fig.2: eine Ausführungsform der neuen Vorrichtung zum Herstellen eines Vlieses in zwei unterschiedlichen Arbeitsstellungen,
- Fig. 3 und 4: eine andere Ausführungsform der neuen Vorrichtung,
- Fig. 5: eine Seitenansicht des bei der Herstellung des Vlieses zu verwendenen Behälters,
- Fig. 6: eine Draufsicht auf eine Ausführungsform der Spanorientierungsmaske,
- Fig. 7: die Draufsicht auf eine andere Ausführungsform der Spanorientierungsmaske,
- Fig. 8: die Seitenansicht eines Ausführungsbeispieles der Vorrichtung mit einer verschiebbaren Spanorientierungsmaske und
- Fig. 9: die Draufsicht auf ein Ausführungsbeispiel der Spanorientierungsmaske gemäß Fig. 8.

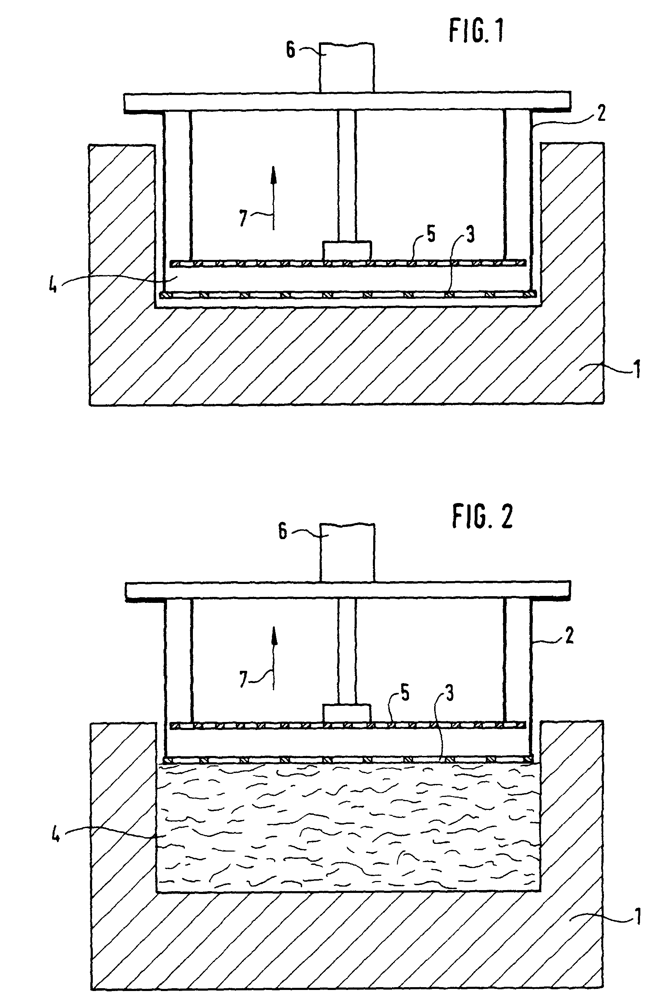

Die Figuren 1 und 2 zeigen ein Ausführungsbeispiel der Vorrichtung zum Herstellen eines Vlieses aus der spanoder faserförmigen Preßmasse. Die Vorrichtung enthält die Preßform 1, deren topfförmiger Füllraum 4 mit einer Preßmasseschicht gefüllt werden soll. Desweiteren enthält die Vorrichtung den mit Preßmasse füllbaren Behälter 2, welcher als Boden eine Spanorientierungsmaske 3 besitzt. Die Spanorientierungsmaske 3 ist , wie später noch gezeigt wird, mit Schlitzen versehen, um den im Füllraum 4 abgelegten Spänen des Vlieses eine Vorzugsrichtung zu geben. Bei dem in den Figuren 1 und 2 gezeigten Ausführungsbeispiel ist oberhalb der Spanorientierungsmaske 3 beweglich ein Siebboden 5 aufgehängt, welcher mit einem Rüttelantrieb 6 verbunden ist.

Die Figuren 1 und 2 verdeutlichen, wie das Vlies im Füllraum 4 erzeugt wird. Fig. 1 zeigt die Vorrichtung zu Beginn der Herstellung des Vlieses. Sie befindet sich dabei in ihrer untersten Lage, so daß nur ein geringer Abstand zwischen der Spanorientierungsmaske 3 und dem Boden des Behälters 2 vorhanden ist.Es sei angenommen, daß der Behälter 2 zu diesem Zeitpunkt mit der span- oder faserförmigen Preßmasse gefüllt ist.

Wenn nun der Rüttelantrieb 6 eingeschaltet wird, dann rieselt die Preßmasse durch den Siebboden 5, wird durch die Schlitze in der Spanorientierungsmaske 3 ausgerichtet und im Füllraum 4 abgelegt. Wie durch den Pfeil 7 verdeutlicht, wird der Behälter 2 mit einer solchen Geschwindigkeit aus der Preßform 1 herausbewegt, wie sich das Vlies im Füllraum 4 aufbaut. Fig. 2 zeigt die Vorrichtung nachdem der Füllraum 4 mit dem Vlies gefüllt ist.

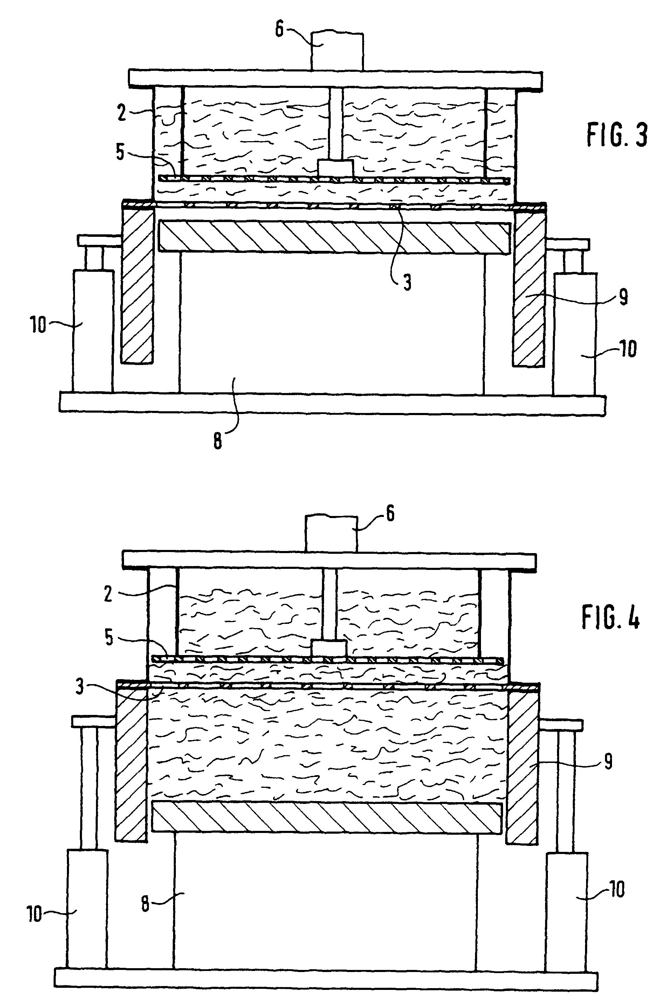

Das in den Figuren 3 und 4 gezeigte Ausführungsbeispiel der Vorrichtung entspricht im wesentlichen der Vorrichtung gemäß den Figuren 1 und 2. Deshalb sind die mit der Vorrichtung der Figuren 1 und 2 übereinstimmenden Teile mit den gleichen Bezugszeichen versehen.

Bei der in den Figuren 3 und 4 gezeigten Vorrichtung besteht die Preßform aus dem feststehenden Mittenstempel 8 und einem diesen umgebenden Rahmen 9. Der Rahmen 9 ist mittels Hubzylindern 10 vertikal heb- und senkbar ausgebildet.

Die Herstellung des Vlieses wird in der gleichen Weise durchgeführt, wie anhand der Figuren 1 und 2 beschrieben.In der Weise, wie sich der vom Rahmen 9 und Mittenstempel 8 gebildete Füllraum mit dem Vlies füllt, wird der Rahmen 9 vertikal nach oben bewegt.

Wie aus Fig. 4 ersichtlich, hat der Rahmen 9 in der Endstellung der Hubzylinder 10 seine obere Stellung erreicht. Der Behälter 2 mit Spanorientierungsmaske 3 und Siebboden 5 ist auf dem Rand des Rahmens 9 gelagert.

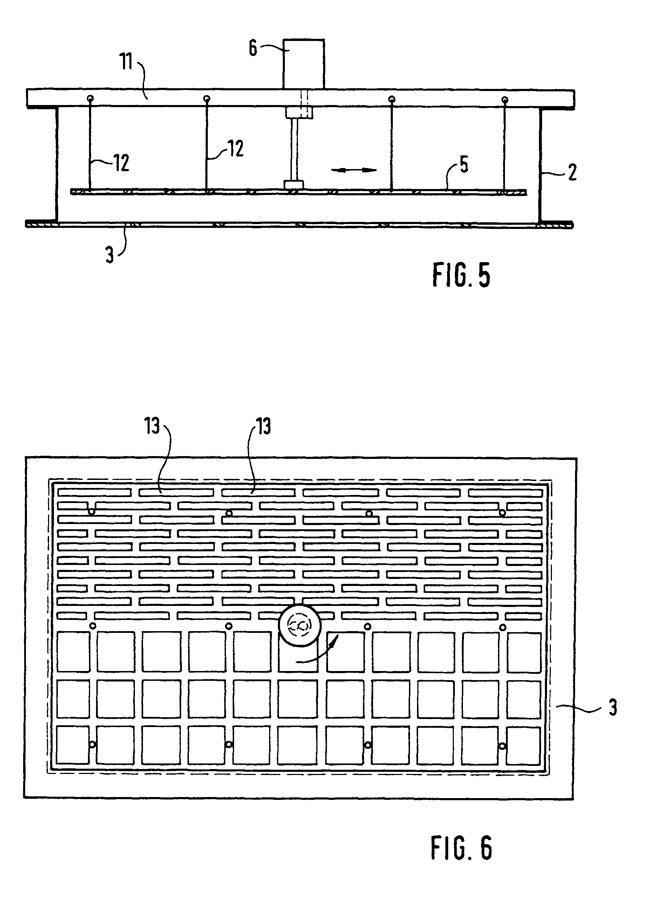

In Fig. 5 ist nochmals der Aufbau des Behälters 2 verdeutlicht. Sein Boden besteht aus der Spanorientierungsmaske 3. An seinem oberen Rand 11 ist mittels Gelenkstangen 12 der Siebboden 5 aufgehängt.

Bei den gezeigten Ausführungsbeispielen ist ein Siebboden 5 vorgesehen, um die Span- oder faserförmige Preßmasse durch die Spanorientierungsmaske 3 zu befördern. Für diesen Zweck können aber auch andere Einrichtungen verwendet werden, beispielsweise solche, welche die Preßmasse oberhalb der Spanorientierungsmaske 3 bürsten oder rühren.

Fig. 6 zeigt eine Spanorientierungsmaske 3, deren obere Hälfte mit horizontal verlaufenden Schlitzen 13 versehen sind. Beim Einsatz der neuen Vorrichtung werden die Späne oder Fasern der Preßmasse in Richtung der Schlitze ausgerichtet. Die Länge der Schlitze beträgt beispielweise das Dreifache der durchschnittlichen Spanlänge, und die Breite der Schlitze beträgt beispielweise 20% mehr als die maximale Spandicke.

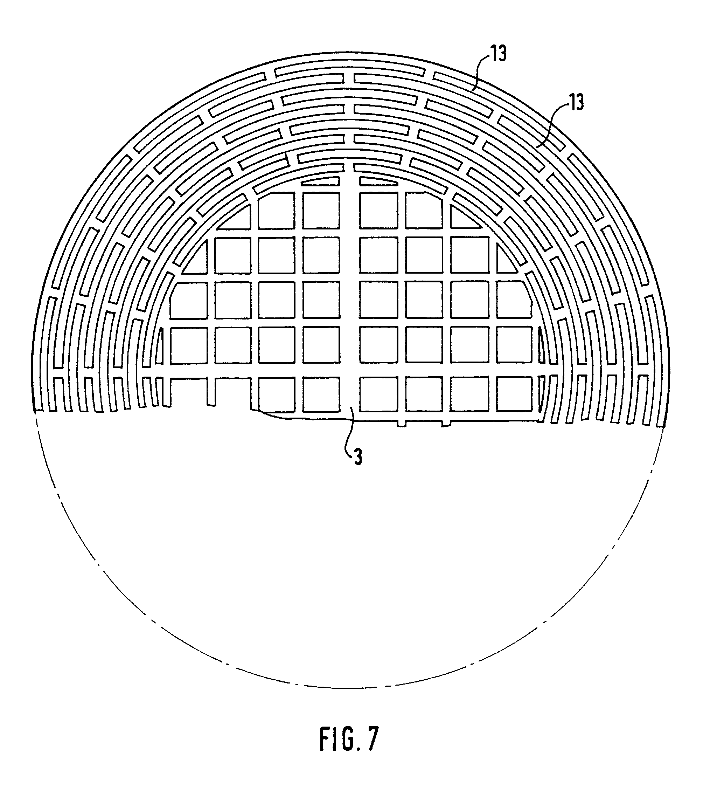

Fig. 7 zeigt das Ausführungsbeispiel einer kreisförmigen Spanorientierungsmaske 3. Sie ist im Randbereich mit in Umfangsrichtung verlaufenden Schlitzen 13 versehen. Mit einer Vorrichtung, welche eine solche Spanorientierungsmaske 3 besitzt, können Vliese für gepreßte Profilkörper erzeugt werden, bei dem der Profilkörper einen besonders stabilen und schlag-und stoßfesten Rand aufweist.

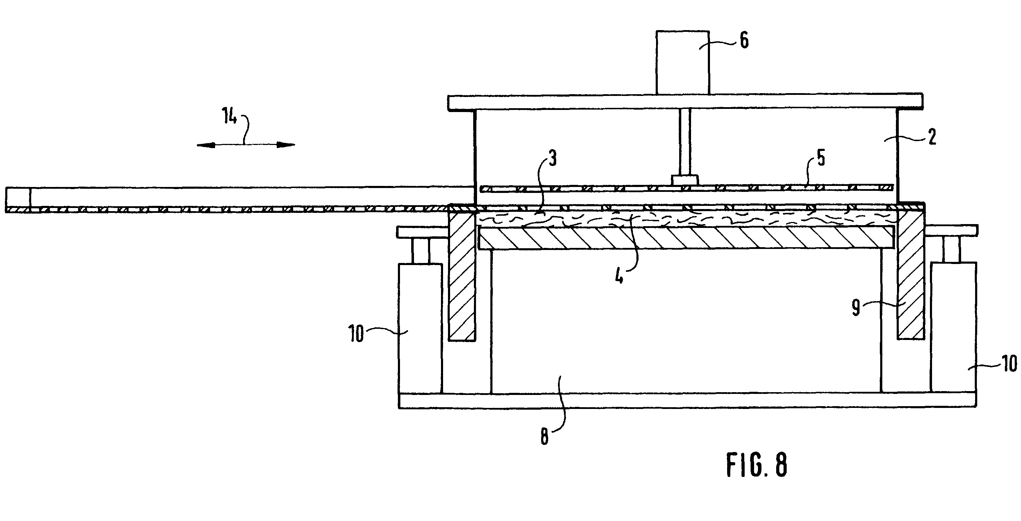

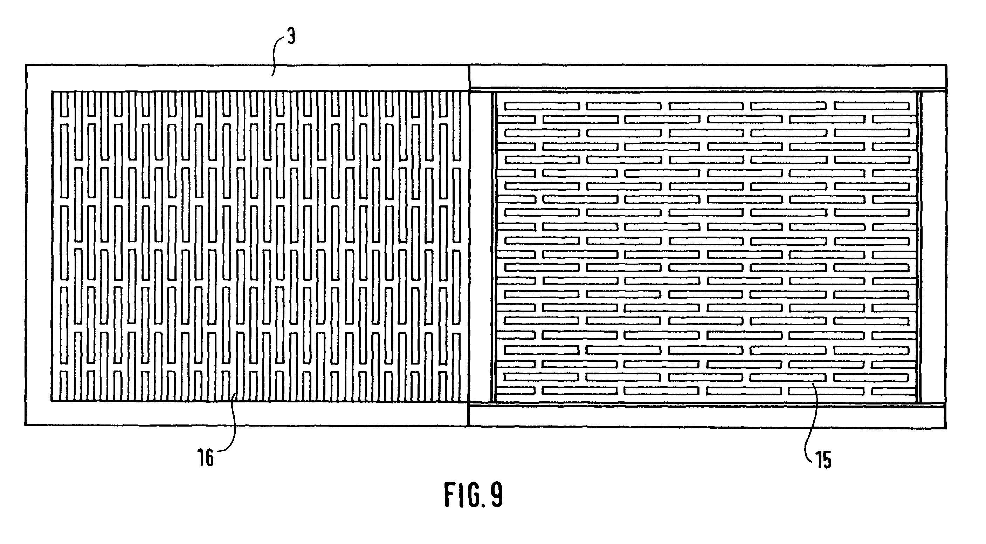

Mitunter kann es auch wünschenswert sein, mit der Vorrichtung ein aus mehreren Schichten bestehendes Vlies herzustellen, bei dem die Späne in den verschiedenen Schichten unterschiedlich orientiert sind. In den Figuren 8 und 9 ist das Ausführungsbeispiel einer solchen Vorrichtung gezeigt. Wie in Fig. 8 zu erkennen und durch den Pfeil 14 verdeutlicht ist, ist die Spanorientierungsmaske 3 in dem Behälter 2 horizontal verschiebbar angeordnet.

Bei dem in den Figuren 8 und 9 gezeigten Ausführungsbeispiel besteht die Spanorientierungsmaske 3 aus zwei Sieben 15 und 16, deren öffnungen unterschiedlich orientiert sind. Bei dem gezeigten Ausführungsbeispiel weisen die Öffnungen eine um 90 Winkelgrade zueinander versetzte Orientierung auf. Die Siebe in der Spanorientierungsmaske 3 können aber auch einen Winkel zueinander aufweisen.

Die Vorrichtung gemäß den Figuren 8 und 9 funktioniert in folgender Weise :
Es sei angenommen, daß sich die Spanorientierungsmaske 3 in der aus Fig 8 ersichtlichen Stellung über dem Füllraum 4 befindet, d.h.das Sieb 15 wird bei der Herstellung der ersten Vliesschicht Für die Herstellung der nächsten Vliesschicht wird die Spanorientierungsmaske 3 nach rechts verschoben, so daß sich das Sieb 16 über dem Füllraum 4 befindet. In der mit dem Sieb 16 erzeugten Vliesschicht sin die Späne um 90 Winkelgrade gegenüber den in der ersten Vliesschicht vorhandenen Spänen orientiert.

## Patentansprüche

1. Vorrichtung zum Herstellen eines Vlieses aus einer schüttfähigen, jedoch nur schlecht fließfähigen span- oder faserförmigen, mit einem Bindemittel versetzten Preßmasse in einer Preßform mit einem oberhalb des Füllraumes auf die Preßform aufsetzbaren, mit der Preßmasse füllbaren Behälter,
dadurch gekennzeichnet, daß unterhalb des Bodens des Behälters (2) feststehend eine mit einem Schlitzmuster versehene Spanorientierungsmaske (3) angeordnet ist.

2. Vorrichtung nach Anspruch 1,
dadurch gekennzeichnet, daß die Spanorientierungsmaske (3) am Behälter (2) befestigt ist.

3. Vorrichtung nach Anspruch 1,
dadurch gekennzeichnet, daß die Spanorientierungsmaske (3) aus mehrerern Sieben (15,16) mit unterschiedlich orientierten Lochmustern besteht.

4. Vorrichtung nach den Ansprüchen 1 und 3,
dadurch gekennzeichnet, daß die Spanorientierungsmaske (3) im Behälter (2) verschiebbar angeordnet ist.

5. Vorrichtung nach den Ansprüchen 1 bis 4,
dadurch gekennzeichnet, daß oberhalb der Spanorientierungsmaske (3) ein Siebboden (5) nachgiebig am Behälter (2) aufgehängt und mit einem Rüttelantrieb (6) versehen ist.
